# EUROPEAN PATENT APPLICATION

(11) **EP 3 043 083 A1**
(43) Date of publication of application: **13.07.2016**
(21) Application number: 15186208.3
(22) Date of filing: 22.09.2015
(51) Int. Cl.: F16C 41/00, H02K 49/10, H02K 7/18, B61F 15/12, F16C 19/38, B61K 9/04

(54) **ROLLING BEARING ASSEMBLY WITH INTEGRATED GENERATOR**

(30) Priority: 29.10.2014 GB 201419220
(71) Applicant: Aktiebolaget SKF, 41 550 Göteborg (SE)
(72) Inventor: ANGELIS, Georgo, 5342NJ Oss (NL); KLEINMEULEMAN, Peter, 5912 TA Venlo (NL)
(74) Representative: Tweedlie, Diane Harkness

(57) **Abstract**

The invention resides in a bearing assembly (100) comprising a generator for harvesting electrical energy from rotational kinetic energy. The generator (170) comprises a magnetic rotor (175) and a stator having a coil (178) with at least one winding, and generates electrical energy based on electromagnetic induction. The magnetic rotor (175) comprises a plurality of magnets arranged with alternating polarities along a periphery of the rotor. According to the invention, the generator is mounted to a first part (110) of the bearing assembly, which is rotatable about the bearing axis of rotation (105), whereby the magnetic rotor is rotationally supported relative to the stator and is rotatable about an axis of rotation, which is different from the bearing axis of rotation. The assembly further comprises a target surface (125) made of an electrically conductive material, which surface is provided on a second part (120) of the bearing assembly. During operation of the bearing assembly, relative rotation takes place between the first and second parts. The magnetic rotor is arranged such that magnetic field lines from the plurality of magnets will intersect the target surface (125) during at least part of one revolution about the bearing axis of rotation.

## Description

### FIELD OF THE INVENTION

The invention relates to a bearing assembly comprising a rolling element bearing and means for generating electrical energy from rotation of the assembly.

### BACKGROUND TO THE INVENTION

An example of such a bearing assembly is disclosed in EP 1292831. The assembly comprises a wireless self-powered sensor unit which is electrically powered by an integrated generator. Electric power is generated via electromechanical energy conversion using permanent magnets, an armature winding and a target wheel that is mounted to and rotates with one of the bearing rings. In one example, the generator comprises a stator formed by a winding that encircles a magnetic core, whereby the target wheel is a toothed wheel. The rotating target wheel causes a change in magnetic flux in an air gap between the magnetic core and the teeth of the wheel, producing an electric current in the winding. In an alternative example, the target wheel is formed by a magnetized ring whose rotation induces an electric current in the winding of the stator.

The toothed wheel or magnetized ring therefore has a diameter which is governed by the diameter of the bearing ring to which it is mounted. Therefore, if the solution is to be integrated in bearings of different size, it is necessary to execute the toothed wheel or magnetized ring in a range of diameters. These components of the generator are relatively expensive. Furthermore, if the bearing has a large diameter, the toothed wheel or magnetized ring will add considerably to the rotating mass, leading to higher friction losses.

A further example of a bearing assembly comprising an integrated generator is disclosed in WO 2014/108169. In this example, the generator is housed within an end cap that engages a rotatable part of the bearing assembly. The generator comprises a pendulum unit, which oscillates back forth during rotation of the bearing, under the influence of gravity.

There is still room for improvement.

### SUMMARY OF THE INVENTION

The invention resides in a bearing assembly comprising a generator for harvesting electrical energy from rotational kinetic energy. The generator comprises a magnetic rotor and a stator having a coil with at least one winding, and generates electrical energy based on electromagnetic induction. The magnetic rotor comprises a plurality of magnets arranged with alternating polarities along a periphery of the rotor. According to the invention, the generator is mounted to a first part of the bearing assembly, which is rotatable about the bearing axis of rotation, whereby the magnetic rotor is rotationally supported relative to the stator and is rotatable about an axis of rotation, which is different from the bearing axis of rotation. The assembly further comprises a target surface made of an electrically conductive material, which surface is provided on a second part of the bearing assembly. During operation of the bearing assembly, relative rotation takes place between the first and second parts. The magnetic rotor is arranged such that magnetic field lines from the plurality of magnets will intersect the target surface during at least part of one revolution about the bearing axis of rotation.

During operation, the magnetic field lines from the plurality of magnets move relative to the electrically conductive target surface. This induces eddy currents in the target surface, which in turn generate oppositely polled magnetic fields. The oppositely polled magnetic fields act on the magnets of the magnetic rotor, resulting in reaction forces that cause rotation of this rotor. A contact-free magnetic coupling is thus formed between the target surface and the magnetic rotor. Preferably, the magnetic rotor has at least 4 magnets. More preferably, the magnetic rotor has at least 6 magnets

The magnetic rotor of the generator has a different rotation axis from the bearing rotation axis and can therefore have a diameter that is considerably smaller than the bearing mean diameter. The generator is therefore low in weight and can be implemented in bearing assemblies of various sizes.

Suitably, the bearing assembly comprises a rolling element bearing having inner and outer bearing rings between which at least one row of rolling elements is disposed. In a first embodiment, the generator is at least partly arranged in a radial gap between the inner and outer bearing rings. The generator may also be arranged entirely within the radial gap.

In one example of the first embodiment, the first part of the bearing assembly, to which the generator is mounted, is the inner ring. The second part of the assembly, on which the target surface is provided, may be formed by the bearing outer ring. Alternatively, the second part may be formed by a cage or guide ring which retains or guides rolling elements of the bearing assembly. The cage/guide ring rotates at a different speed from the bearing inner ring, which ensures that the target surface "sees" a changing magnetic field. In a still further alternative, the second part is formed by a seal or shield that is mounted to the bearing outer ring.

In a second example of the first embodiment, the first part of the bearing assembly is formed by the outer ring. The second part of the assembly, on which the target surface is provided, may be formed by the bearing inner ring, or by a cage or guide ring or by a seal or shield that is mounted to the bearing inner ring.

In a third example of the first embodiment, the first part of the bearing assembly is formed by a cage or guide ring that retains or guides rolling elements of the bearing assembly. The second part of the assembly, on which the target surface is provided, may be formed by the bearing inner ring, or by the bearing outer ring or by a seal or shield that is mounted to one of the bearing rings.

A bearing assembly according to the invention may comprise a bearing with two axially spaced sets of rolling elements, such as a double-row taper roller bearing. The generator may then be arranged between the two roller sets. When the target surface is provided on a seal or shield, the generator is suitably arranged at an axially outer side of one of the roller sets.

In a second embodiment of the invention, the generator is mounted on a separate support member, which is arranged at one axial side of the bearing assembly, outside the confines of the bearing rings. In one example of the second embodiment, the bearing assembly comprises a shaft to which the bearing inner ring is mounted, and a housing to which the bearing outer ring is mounted, whereby the shaft forms the first part of the assembly and the housing forms the second part of the assembly. Suitably, the support member is coupled to the shaft and the target surface is provided on a surface of the housing.

In a preferred example, the bearing assembly is a railway journal bearing comprising a journal shaft that is rotationally supported in a saddle adapter by a double-row taper roller bearing. The assembly further comprises an end cap that is bolted to the journal shaft, and which bears against an inner ring of the bearing, to maintain bearing preload. The end cap houses at least one sensor, such as an accelerometer, which preferably comprises a wireless antenna for transmitting sensor data. The sensor is powered by a generator according to the invention.

The magnetic rotor and stator of the generator are arranged at a radially outer section of the end cap. The saddle adapter has an arcuate geometry, whereby the target surface is formed by a radially inner surface of the saddle adapter, which surface at least partly overlaps the magnetic rotor of the generator, in an axial direction.

During operation, a magnetic coupling is formed between the magnetic rotor and the target surface of the saddle adapter, which drives the rotor into rotation. When the revolving end cap is in an angular position where the magnetic rotor is no longer overlapped by the saddle adapter, the rotor's momentum keeps it rotating until it is once again "driven" by the magnetic fields generated by the eddy currents which are induced in the target surface. Thus, continuous power generation is possible even when the target surface is not formed by a continuous circle.

In a bearing assembly according to the invention, the target surface may be a surface of the second part. In the embodiment described above, where the bearing assembly is a railway journal bearing, the saddle adapter, comprising the target surface, is typically made of steel. In other embodiments, where the second part is one of the bearing rings, the target surface is made of bearing steel. When the second part is a shield or seal, the target surface may be an annular surface of a casing element that is made of e.g. steel. By using a surface of one of the parts of the bearing assembly as the target surface, the number of components of the assembly is minimised and its manufacture is simplified.

Needless to say, the target surface may also be a surface of an additional component. For example, when the second part is a saddle adapter as described above, a strip of e.g. aluminium may be attached to the radially inner surface of the saddle adapter, such that the target surface is made of aluminium. Such a separate strip or ring, comprising the target surface, may also be attached to one of the bearing rings or to a shield or seal. Suitably, the separate strip or ring has a flat target surface and is thus of straightforward construction, making it inexpensive to manufacture for a variety of bearing sizes.

When the target surface is formed on a separate ring or strip, or when the target surface is a surface of a cage or guide ring, the target surface is preferably made of a paramagnetic material such as aluminium or copper. The advantage of a paramagnetic material is that the low electrical resistance optimises the generation of eddy currents, which "drive" the magnetic rotor of the generator.

A further advantage of a paramagnetic target surface is that there is no magnetic attraction between the target surface and the magnets of the magnetic rotor.

In many cases, the target surface - even when made of a magnetically non-conductive material, will be arranged in close proximity to parts of the bearing assembly that are made of ferromagnetic material. It is therefore likely that magnetic attraction will occur. In effect, the attraction force will increase the radial load on a bearing or bearings that rotationally support the magnetic rotor of the generator, leading to an increase in friction.

Thus, in a further development, the stator comprises a ferromagnetic body, which is arranged opposite from the target surface, such that the magnetic rotor lies between the ferromagnetic body and the target surface. The ferromagnetic body is configured to exert an attraction force on the first magnetic rotor which cancels out the attraction force exerted by the steel of or close to the target surface. Preferably, the ferromagnetic body has a laminated structure, to suppress the generation of eddy currents in the body and minimise eddy current losses.

Suitably, the magnets of the magnetic rotor are arranged radially to the generator axis of rotation with regard to their North-South orientation and the magnetic rotor preferably comprises at least six magnets. For optimal generation of eddy currents in the target surface, the generator is arranged such that the radial periphery of the magnets faces the target surface. In other words, the target surface is parallel to the generator axis of rotation. It is also possible to arrange the generator such that the target surface is perpendicular to the generator axis of rotation. Such an arrangement may be beneficial, depending on the geometric constraints of the bearing assembly.

In one example of a bearing assembly according to the invention, the generator comprises only a first magnetic rotor whose rotation induces an electrical current in the coil of the stator. In a further example, the generator comprises a second magnetic rotor coupled to the first, whereby rotation of the second magnetic rotor induces an electrical current in the stator coil. Suitably, the second magnetic rotor comprises one or more magnets with a radial N-S orientation relative to the generator axis of rotation.

In some examples, the generator comprises a claw pole generator, whereby the stator comprises a yoke with a number of claws that form at least part of a circle.

When the generator comprises a second magnetic rotor, the one or more magnets of the second rotor are arranged to rotate within the claws. When the claw pole generator comprises only a first magnetic rotor, the magnets of the first rotor are arranged to rotate within the claws and are partly surrounded by the claws. The yoke is free of claws where the magnets face the target surface.

A bearing assembly according to the invention may comprise any type of rolling element bearing, such as a deep groove ball bearing or a tapered roller bearing or spherical roller bearing. Suitably, the assembly further comprises at least one sensor which is powered by the generator. The sensor may be a temperature sensor, a vibration sensor, an acoustic emission sensor, a displacement sensor or any other type of sensor which is useful for monitoring the condition of the bearing or the condition of a lubricant within the bearing. As a result of the invention, the sensor can be powered for the lifetime of the bearing.

A bearing assembly according to the invention has further advantages, which will become apparent from the following detailed description and accompanying figures.

### DESCRIPTION OF THE FIGURES

In the following, the invention is described with reference to the accompanying drawings, in which:
- Fig.1a,1b: respectively show a cross-sectional view and a perspective view of a bearing assembly according to an embodiment of the invention, comprising a generator housed within an end cap;
- Fig. 2: shows a perspective view of an example of magnetic rotor, which may form part of and a generator, and a target surface;
- Fig. 3: shows a perspective view of a further example of a generator that may be used in a bearing assembly according to the invention.
- Fig. 4: shows a perspective view of a further example of a bearing assembly according to the invention;

### DETAILED DESCRIPTION

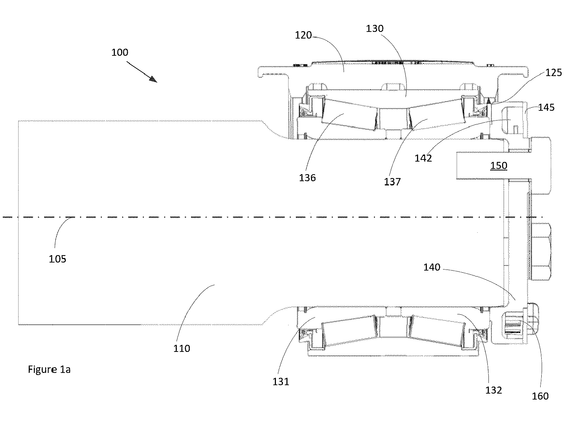

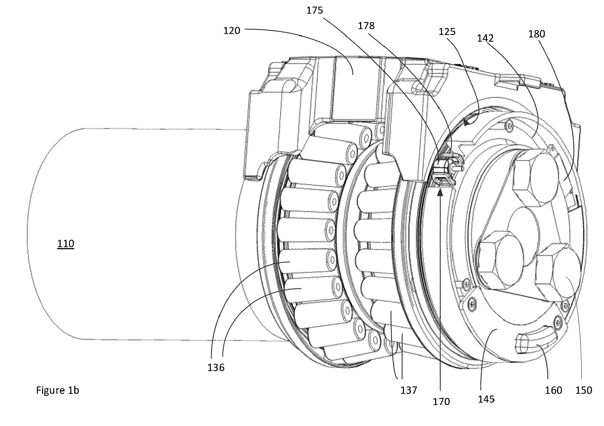

An embodiment of a bearing assembly according the invention is shown in Figs. 1a and 1b. The assembly 100 comprises a double-row tapered roller bearing which supports a railway axle 110 relative to a housing 120, which housing is typically referred to as a saddle adapter. The bearing comprises an outer ring 130 (hidden from view in Fig. 1b), mounted to the saddle adapted 120, and further comprises first and second inner rings 131, 132 for accommodating first and second rows of tapered rollers 136, 137. The bearing is preloaded via an end cap 140, which bears against an axially outer face of the second inner ring 132 and is bolted to the axle 110 via three bolts 150.

The end cap 140 comprises an annular cavity 142 in which a sensor unit 160 is housed. The sensor unit comprises at least one sensor for measuring a parameter which is indicative of an operating condition of the bearing. In the depicted example, the sensor unit comprises a vibration sensor. The sensor unit may further comprises a microprocessor and wireless antenna for transmitting sensor data, and is powered by electrical energy harvested from rotation of the axle 110. To this end, a generator 170 comprising a magnetic rotor 175 and an induction coil 178 is provided within the annular recess 142 of the end cap 140. In Fig. 1b, sections of an end cap cover 145 have been removed to reveal the generator 170. According to the invention, the magnetic rotor is rotationally supported relative to the end cap 140 and comprises a plurality of oppositely polled magnets which are rotational about a rotor axis of rotation that is different from the bearing axis of rotation 105.

The magnetic rotor 175 is arranged such that magnetic field lines from the magnets intersect a radially inner surface 125 of the saddle adapter 120, when the generator 170 is in a position radially opposite from the surface 125. This surface will be referred to as the target surface 125. In the depicted example, the saddle adapter is made of steel, which is an electrically conductive material. Eddy currents are therefore induced in the target surface 125 when the generator 170 passes by during rotation of the end cap, and exposes the target surface to a changing magnetic field from the magnets of the magnetic rotor. The eddy currents generated in the target surface set up their own opposing magnetic field, which exerts a reaction force on the magnets of the magnetic rotor 175, causing rotation of the magnetic rotor about the rotor axis of rotation.

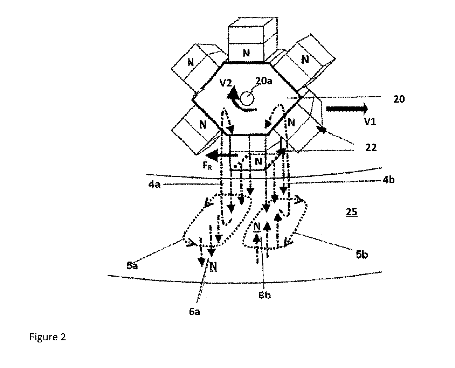

This is illustrated in more detail in Figure 2, which shows a perspective view of an example of a magnetic rotor 20 and part of a target surface 25. The magnetic rotor 20 is rotatable about an axis of rotation 20a and comprises a number of permanent magnets 22 with alternating polarities. The magnets 22 have a N-S orientation in radial direction relative to the rotation axis 20a, whereby a radial periphery of the magnetic rotor 20 faces the target surface 25 and is separated by a small air gap.

Magnetic field lines 4a, 4b of the magnet 22, which is arranged closest to the target surface 25, permeate this surface. Due to rotation of the end cap, to which the generator is mounted, the field lines 4a, 4b move in direction V1 through the target surface 25. Opposed eddy current fields 5a, 5b are induced in the target surface 25, which generate their own magnetic field lines 6a, 6b. The magnetic fields 6a, 6b oppose the magnetic fields 4a, 4b of the permanent magnet and generate a reaction force F_{R} on the magnet which acts to inhibit movement of the rotor in direction V1. The reaction force F_{R} causes a rotational movement in direction V2 of the magnetic rotor 20. The magnetic field lines from the next moving magnet 22 then permeate the target surface 25 and set up eddy currents and opposing magnetic fields generating a reaction force F_{R} that keeps the rotor 20 spinning. It is also thought that the Lorenz forces, which act on the charged particles moving in the target surface, generate reaction forces on the magnets which keep rotor spinning during relative movement between the rotor 20 and the target surface 25. In other words, a magnetic coupling is created between the magnets 22 of the rotor 20 and the target surface.

Returning to Fig. 1b, rotation of the magnetic rotor 175 induces electrical current in the coils 178 of the generator via electromagnetic induction, which is used to power the sensor unit 160. Suitably, the end cap additionally houses means for storing power, such as a super capacitor 180 and appropriate circuitry. In use of the end cap 140, the annular cavity 142 and components housed therein are covered. At the location of the generator 170, at least the magnetic rotor 175 is covered in radial direction by a magnetically and electrically non-conductive material such as plastic, to enable the magnetic field lines to permeate the target surface 125 on the saddle adapter.

As may be seen from Fig. 1b, the saddle adapter 120 has an arcuate target surface, which only partly surrounds the end cap 140 in radial direction. The magnetic coupling between the target surface and magnetic rotor therefore exists through only a part of one revolution of the end cap. When the coupling is interrupted, the magnetic rotor's angular momentum keeps it rotating until the coupling is re-established. Continuous current generation is therefore possible during rotation of the end cap.

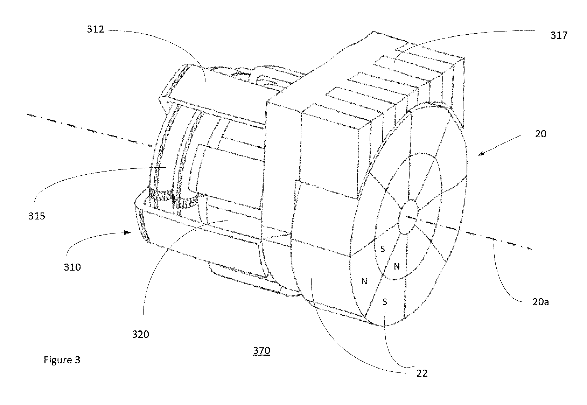

A further example of a generator that may be used in a bearing assembly according to the invention is depicted in Figure 3. In this example, the generator 370 comprises a first magnetic rotor 20, such as shown in Figure 2, and further comprises a second magnetic rotor 320. The first magnetic rotor has a plurality of magnets 22 with alternating polarities arranged around the periphery, which face a target surface (not shown). The second magnetic rotor 320 is mechanically coupled to the first magnetic rotor 20 and is rotational about the axis of rotation 20a. Suitably, the second magnetic rotor 320 also comprises plurality of magnets 22 with alternating polarities arranged around the radial periphery. The arrangement of the first and second magnetic rotors is rotationally mounted via bearings (not shown) to e.g. the end cap 140 of Figs. 1a, 1b or to an inner ring of a rolling element bearing.

In the depicted example, the generator 370 comprises a claw pole generator having a yoke 310 with a number of claws 312 arranged at intervals around a circumference of the yoke. The yoke further comprises a coil 315. The second magnetic rotor 320 is arranged within the claws 312 of the yoke 310. Thus, it is the rotation of the second magnetic rotor 320 which induces an electric current in the coil 315 due to electromagnetic induction.

Advantageously, the stator further comprises a laminated ferromagnetic body 317, which is arranged to face a radial periphery of the first magnetic rotor 20 at a side opposite from the radial periphery that faces the target surface. In other words, the first magnetic rotor 20 lies between the laminated ferromagnetic body 317 and the target surface.

Let us assume that the target surface is a radially inner surface of an aluminium ring that is mounted to a bearing outer ring, and that the generator 370 is mounted to a rotating bearing inner ring. Although the magnets 22 of the first magnetic rotor are not attracted by aluminium, the underlying bearing steel (which is a magnetic conductor) does exert an attraction force on the magnets. This attraction force will cause increased friction in the bearings that support the first and second magnetic rotors. The purpose of the laminated ferromagnetic body 317 is therefore to attract the magnets 22 of the first magnetic rotor 20 in an opposite direction, such that the net attraction force on the first magnetic rotor is zero. Suitably, the ferromagnetic body 317 has a laminated structure, to suppress the generation of eddy currents and minimise eddy current losses.

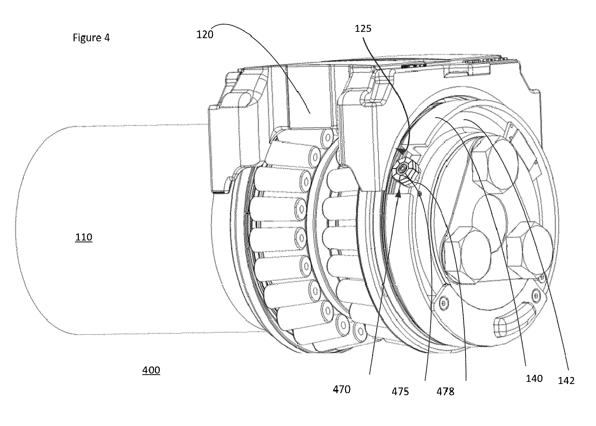

When the generator is mounted to a support member, such as an end cap, which is outside the confines of the bearing, it is therefore beneficial if the support member is made of a magnetically and electrically non-conductive material such as plastic, at least in the vicinity of the magnetic rotor. In an application such as depicted in Figs. 1a and 1b, where the end cap is used to preload the bearing, strength and stiffness requirements may not permit the use of sufficient plastic to remove the unwanted effects of magnetic attraction. These effects can, however, be mitigated by orienting the magnetic rotor so as to be less influenced by neighbouring parts which are made of e.g. steel. An example of such an orientation is shown in the bearing assembly of Fig. 4.

The bearing assembly 400 is once again a railway axle bearing of the type shown in Figs 1 a and 1 b, having an end cap 140 that is bolted to the axle 110. Again, the end cap houses a generator 470 comprising a magnetic rotor 475 that is rotationally mounted relative to the end cap 140. In this example, the magnetic rotor has an axis of rotation which is perpendicular to the target surface 125. The magnetic field lines emanating from the magnets of the magnetic rotor 475 will still intersect the target surface 125 on the saddle adapter 120, meaning that eddy currents will be induced, resulting in a magnetic coupling as described above. In comparison with the example of Fig. 1b, where the magnetic rotor has an axis of rotation parallel to the target surface 125, the magnetic coupling will be weaker. The generated energy may nevertheless be sufficient, depending on power requirement of the connected consumers. An advantage of the "perpendicular" orientation is that the magnets of the magnetic rotor exert less magnetic attraction on a radially inner surface of the annular cavity 142 of the end cap, which is typically made of steel, for strength and stiffness reasons. At an axially outer side of the cavity, magnetic rotor may be enclosed by a plastic material, which is not influenced by the magnetic field lines.

A number of aspects/embodiments of the invention have been described. It is to be understood that each aspect/embodiment may be combined with any other aspect/embodiment. The invention may thus be varied within the scope of the accompanying patent claims.

## Claims

1. Bearing assembly (100, 400) comprising a generator (170, 370, 470) for harvesting electrical energy from rotation, based on electromagnetic induction, the generator comprising a magnetic rotor (20, 175, 475) and a stator having a coil (178, 315, 478) with at least one winding,
**characterized in that**
- the generator is mounted to a first part of the bearing assembly, which is rotational about the bearing axis of rotation (105), whereby the magnetic rotor (20, 175, 475) is rotationally supported relative to the stator and is rotatable about a rotor axis of rotation (20a), which is different from the bearing axis of rotation (105);
- the assembly further comprises a target surface (25, 125) made of an electrically conductive material, which is provided on a surface of a second part (120) of the bearing assembly, whereby during bearing operation, relative rotation takes place between the first and second parts; and
- the magnetic rotor (20, 175, 475) comprises a plurality of magnets (22) having alternating polarities along a radial periphery of the rotor, and is arranged such that magnetic field lines (4a, 4b) from the plurality of magnets will intersect the target surface during at least part of one revolution of the first part of the assembly.

2. Bearing assembly according to claim 1, wherein the target surface (25, 125 comprises a ferromagnetic material or a paramagnetic material.

3. Bearing assembly according to claim 1 or 2, wherein the radial periphery of the magnetic rotor (20, 175) faces the target surface (25, 125), such that the rotor axis (20a) is parallel to the target surface.

4. Bearing assembly according to claim 1 or 2, wherein the radial periphery of the magnetic rotor (475) is arranged such that the rotor axis is perpendicular to the target surface (125).

5. Bearing assembly according to any preceding claim, the assembly comprising a bearing having an inner ring (131, 132), an outer ring (130) and at least one row of rolling elements (136, 137) arranged within an annular gap between the inner and outer rings.

6. Bearing assembly according to claim 5, wherein the first part or the second part of the assembly is one of:
• the bearing inner ring (131, 132);
• the bearing outer ring (130);
• a seal or shield for enclosing the annular gap between the bearing rings;
• a cage or guide ring for retaining or guiding the at least one row of rolling elements.

7. Bearing assembly according to claim 5 or 6, wherein the generator (170, 370, 470) is at least partly arranged in the annular gap between the bearing rings.

8. Bearing assembly according to claim 5 or 6, wherein the generator is mounted on a separate support member, which is arranged at an axial side of the bearing;

9. Bearing assembly according to claim 8, further comprising a shaft (110) and a housing (120), wherein:
• the shaft (110) forms the first part of the bearing assembly;
• the housing (120) forms the second part of the assembly; and
• the separate support member is an end cap (140) for maintaining a required bearing preload.

10. Bearing assembly according to claim 9, wherein:
• the generator is contained within the end cap (140); and
• between the magnetic rotor of the generator and the target surface (25, 125), the end cap comprises a magnetically and electrically non-conductive material.

11. Bearing assembly according to claim 9 or 10, wherein the housing is a saddle adaptor (120) for a railway axle bearing and the target surface (125) is an arcuate surface that extends in circumferential direction through less than 360 degrees.

12. Bearing assembly according to any preceding claim, wherein the stator comprises a ferromagnetic body (317), which is arranged opposite from the target surface (25, 125), such that the magnetic rotor (20) lies between the ferromagnetic body and the target surface.

13. Bearing assembly according to claim 12, wherein the ferromagnetic body (317) has a laminated structure.

14. Bearing assembly according to any preceding claim, wherein the generator (370) further comprises a second magnetic rotor (320), coupled to the magnetic rotor (20).

15. Bearing assembly to claim 14 preceding claim, wherein the generator (370) comprises a claw pole generator, whereby the stator comprises a number of claws (312) which form at least part of a circle, and wherein the second magnetic rotor (320) is arranged within the claws (312) of the claw pole generator.

16. Bearing assembly according to any preceding claim, further comprising a sensor unit (160), the sensor unit having at least one sensor and a wireless transmitter, which is powered by electricity from the generator.
